# EUROPEAN PATENT APPLICATION

(11) **EP 4 691 820 A1**
(43) Date of publication of application: **11.02.2026**
(21) Application number: 24796563.5
(22) Date of filing: 01.03.2024
(51) Int. Cl.: B60K 1/00, B60K 11/04, B60L 58/26

(54) **MOUNTING STRUCTURE FOR HEAT EXCHANGER**

(30) Priority: 28.04.2023 JP 2023075125
(71) Applicant: Mitsubishi Fuso Truck and Bus Corporation, Nakahara-ku, Kawasaki-shi Kanagawa 2118522 (JP)
(72) Inventor: IBARAKI, Kenichiro, Kawasaki-shi, Kanagawa 211-8522 (JP); KUMAGAI, Naotatsu, Kawasaki-shi, Kanagawa 211-8522 (JP); AMARASINGHE, Suwin Indula, Kawasaki-shi, Kanagawa 211-8522 (JP)
(74) Representative: Hofstetter, Schurack & Partner
(86) International application number: PCT/JP2024/007897
(87) International publication number: WO 2024/224805

(57) **Abstract**

A heat exchanger (20) exchanges heat, via fluid, with a battery (13) for driving and a motor (16) for driving rear wheels that are mounted on a vehicle (1) having a side frame (12). A mounting structure for this heat exchanger (20) includes: a first circuit that connects the heat exchanger (20) and the battery (13); and a second circuit that connects the heat exchanger (20) and the motor (16). In the first circuit, the fluid circulates between the heat exchanger (20) and the battery (13). In the second circuit, the fluid circulates between the heat exchanger (20) and the motor (16). In the present mounting structure, the heat exchanger (20) is mounted on a vehicle width directional outside of the side frame (12).

## Description

### [Technical Field]

The present disclosure relates to a mounting structure for a heat exchanger mounted on an electric vehicle.

### [Background Art]

Vehicles are equipped with heat exchangers for adjusting temperatures of drive sources. For example, vehicles using engines as the drive sources are equipped with heat exchangers such as radiators or oil coolers to keep the temperatures of the engines within normal ranges. Electric vehicles using motors for traveling as the drive sources are also equipped with heat exchangers to keep the respective temperatures of the motors and batteries serving as power sources of the motors within normal ranges.

For example, PTL 1 discloses a cab-over type truck vehicle equipped with a heat exchanger disposed under a front end of a cab.

### [Citation List]

### [Patent Literature]

[PTL 1]
JP 2017-65516 A

### [Summary of Invention]

### [Technical Problem]

In the electric vehicles using the motors as the drive sources, mounting positions of the motors and the batteries are set based on various reasons. As an example, the position in a vehicle length direction of a motor is set in accordance with drive wheels (frontwheel drive or rear-wheel drive). As another example, a battery, which is large in size and weight, may be disposed under a middle portion in the vehicle length direction in consideration of the center of gravity of the vehicle. Thus, if the heat exchanger is mounted under the front end of the cab as in PTL 1, the heat exchanger may be separated away from the motor and the battery and may cause inconvenience.

The mounting structure for a heat exchanger of the present disclosure has been devised in light of such a problem and an object thereof is to provide a mounting structure for a heat exchanger, in which the heat exchanger can be mounted at a position close to a motor and a battery in a vehicle using the motor as a drive source.

### [Solution to Problem]

(1)A mounting structure for a heat exchanger according to the present application example is adopted for the heat exchanger that exchanges heat, via fluid, with a battery for driving and a motor for driving rear wheels that are mounted on a vehicle having a side frame. The mounting structure is characterized in that the mounting structure includes: a first circuit that connects the heat exchanger and the battery and that allows the fluid to circulate between the heat exchanger and the battery; and a second circuit that connects the heat exchanger and the motor and that circulates the fluid between the heat exchanger and the motor, and the heat exchanger is mounted on a vehicle width directional outside of the side frame.
(2) In the above (1), the battery may be disposed in front of the motor in a vehicle length direction, and the heat exchanger may be disposed between front wheels and the rear wheels of the vehicle and closer to the rear wheels in the vehicle length direction.
(3) In the above (1) or (2), the heat exchanger may include a battery-heat-exchanging portion connected to the first circuit and a motor-heat-exchanging portion connected to the second circuit, and the battery-heat-exchanging portion may be disposed closer to the battery than the motor-heat-exchanging portion in the vehicle length direction.
(4) In any one of the above (1) to (3), the heat exchanger may include a battery-heat-exchanging portion connected to the first circuit and a motor-heat-exchanging portion connected to the second circuit, and the motor-heat-exchanging portion may be disposed closer to the motor than the battery-heat-exchanging portion in the vehicle length direction.
(5) In any one of the above (1) to (4), the heat exchanger may include a battery-heat-exchanging portion connected to the first circuit and a motor-heat-exchanging portion connected to the second circuit, and the battery-heat-exchanging portion and the motor-heat-exchanging portion may be both disposed between the battery and the motor in the vehicle length direction.
(6) In any one of the above (1) to (5), the heat exchanger may be mounted on the vehicle so as to be inclined to the vehicle width directional outside with respect to the vehicle length direction.
(7) In any one of the above (1) to (6), the heat exchanger may be mounted on the vehicle so as to be inclined to the vehicle width directional outside with respect to an up-down direction of the vehicle.

### [Advantageous Effects of Invention]

According to the disclosed mounting structure for a heat exchanger, the heat exchanger can be mounted at a position close to the motor and the battery.

### [Brief Description of Drawings]

[Fig. 1]

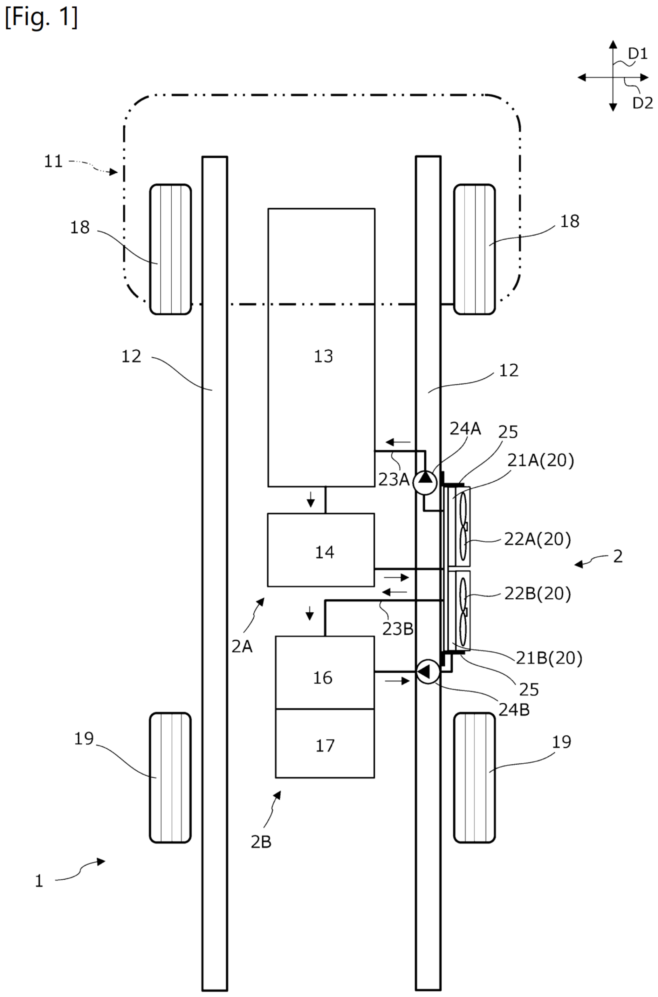

Fig.1 is a plan view illustrating a mounting structure for a heat exchanger according to an embodiment.

### [Description of Embodiments]

An embodiment of the present disclosure will now be described with reference to the drawings. The following embodiment is merely illustrative and there is no intention to eliminate the application of various modifications and techniques not explicitly described in the following embodiment. Each configuration of the following embodiment can be variously modified without departing from the gist thereof. Further, each configuration can be selected and omitted as necessary or can be appropriately combined.

### [1. Configuration]

### <Vehicle>

As illustrated in Fig. 1, a heat exchanger 20 according to the present embodiment is applied to a vehicle 1. The vehicle 1 is, for example, an electric truck and includes a cab 11 and side frames 12. In the drawings, the cab 11 is indicated by a two-dot chain line and a mounted object(s) is omitted.

Hereinafter, a forward direction of the vehicle 1 is referred to as a front side and its opposite direction (reverse direction of the vehicle) is referred to as a rear side. Left and right sides are determined based on a posture that faces toward the front side of the vehicle 1 and a left-right direction D2 is also referred to as a vehicle width direction D2. A direction perpendicular to both a vehicle length direction (front-rear direction) D1 and the vehicle width direction D2 is referred to as an up-down direction. With respect to the vehicle width direction D2, in a portion to the left of the center line of a vehicle body in a top view of the vehicle 1, the left means a vehicle width directional outside and the right means a vehicle width directional inside. Similarly, in a portion to the right of the center line of the vehicle body, the right means the vehicle width directional outside and the left means the vehicle width directional inside.

The pair of left and right side frames 12 extend in the vehicle length direction D1 and are spaced apart from each other in the vehicle width direction D2. The pair of side frames 12 are connected to each other via multiple cross members (not illustrated) extending in the vehicle width direction D2. The pair of side frames 12 support, in cooperation with the cross members from below, the cab 11 and the mounted object disposed behind the cab 11.

The vehicle 1 of the present embodiment is provided with, on the vehicle width directional inside of the pair of side frames 12 (between the side frames), a battery 13 for driving, a DC/DC converter 14, a heater (not illustrated) for the battery 13, a motor 16 for traveling, and a gearbox 17 of an axle. The motor 16 is assumed to include an inverter (not illustrated). Hereinafter, the battery 13 and the motor 16 may be collectively referred to as a "drive device".

The battery 13 is a power source of the motor 16 that drives the vehicle 1. The battery 13 is also referred to as a high voltage battery. The battery 13 is, for example, a lithium-ion battery or a nickel-hydrogen battery and is a secondary battery capable of supplying a relatively high-voltage (generally 200 V or higher) direct current. The battery 13 is disposed at a position closer to the front in the vehicle length direction D1. In the vehicle length direction D1, the battery 13 of the present embodiment partially overlaps with front wheels 18 and the cab 11, and is in a size (arrangement) extending to the rear side further than the front wheels 18 and the cab 11. That is, in the present embodiment, a front end of the battery 13 is located under the cab 11, but a rear end of the battery 13 is located closer to the rear side than a rear end of the cab 11.

The DC/DC converter 14 is disposed in the vicinity (here, on the rear side) of the battery 13. The DC/DC converter 14 is a device for converting direct voltage. For example, the DC/DC converter 14 increases the voltage input from an on-board charger (OBC) to charge the battery 13 or decreases the voltage of the battery 13 to output the decreased voltage to on-board auxiliary devices (such as a non-illustrated auxiliary battery and fans 22A and 22B).

The motor 16 and the gearbox 17 of the axle are arranged on the rear side of the battery 13 (here, on the rear side of the DC/DC converter 14). In other words, the battery 13 is disposed in front of the motor 16 in the vehicle length direction D1. The motor 16 is an electric motor for driving the vehicle 1 and has a standard corresponding to the voltage of the battery 13. The motor 16 is connected to a pair of rear wheels 19 and transmits power to the rear wheels 19 via an axle (not illustrated) to drive the rear wheels 19. The motor 16 operates using electric power supplied from the battery 13. The axle (rear axle) is a device with a function of sharing a load of the vehicle 1 and a function of transmitting a driving force, and the gear box 17 includes gears for exhibiting these functions.

### <Temperature Adjusting System>

Next, description will be made in relation to a mounting structure for the heat exchanger 20 applied to the vehicle 1. The vehicle 1 has a modular temperature adjusting system 2 for adjusting the temperature of the drive device. The temperature adjusting system 2 has at least one of a function of warming the drive device and a function of cooling the drive device. The present embodiment assumes a case where the temperature adjusting system 2 has the function of cooling the drive device. The temperature adjusting system 2 of the present embodiment has two independent modules 2A and 2B each including a circuit in which fluid circulates, the heat exchanger 20, and an object to be cooled. The difference between the modules 2A and 2B is the object to be cooled. Hereinafter, the two modules 2A and 2B are respectively referred to as a "first module 2A" and a "second module 2B" when distinguished from each other. Regarding the two modules 2A and 2B, common elements will be described first, and then each of the circuits will be described.

The respective circuits include flow paths 23A and 23B along which fluid (for example, coolant) circulates and pumps 24A and 24B provided on the respective flow paths 23A and 23B. Hereinafter, the two flow paths 23A and 23B are respectively referred to as a "first flow path 23A" and a "second flow path 23B" when distinguished from each other, and the two pumps 24A and 24B are respectively referred to as a "first pump 24A" and a "second pump 24B" when distinguished from each other. Further, the circuit including the first flow path 23A and the first pump 24A each provided in the first module 2A is also referred to as a "first circuit", and the circuit including the second flow path 23B and the second pump 24B each provided in the second module 2B is also referred to as a "second circuit". Each of the flow paths 23A and 23B is formed by, for example, pipes (piping), hoses, and the likes. Cooling water, cooling oil, or the like can be used as the coolant flowing in the flow paths 23A and 23B. The configurations of the first circuit and the second circuit will be described later.

The pumps 24A and 24B have, for example, a function of pumping the circulating coolant at a predetermined flow speed and/or a function of changing the flow speed. The pumps 24A and 24B control the flow speed and flow amount of the coolant flowing through the first flow path 23A of the first circuit and the second flow path 23B of the second circuit, respectively. Each of the pumps 24A and 24B may be attached to, for example, the side frame(s) 12.

The heat exchanger 20 is a device that exchanges heat with the object to be cooled via the fluid and is mounted on the vehicle width directional outside of the side frame 12. The heat exchanger 20 of the present embodiment is disposed between the front wheels 18 and the rear wheels 19 and closer to the rear wheels 19 in the vehicle length direction D1. In the present embodiment, the heat exchanger 20 is provided one for each of the modules 2A and 2B. The heat exchanger 20 of the first module 2A includes a first radiator 21A and a first fan 22A, and the heat exchanger 20 of the second module 2B includes a second radiator 21B and a second fan 22B. In the vehicle length direction D1, the first module 2A is disposed in front of the second module 2B.

Each of the radiators 21A and 21B may also be referred to as a heat exchanging unit which cools the coolant by exchanging heat between outside air and the coolant flowing inside. The radiators 21A and 21B have a function of cooling the coolant that has an increased temperature before returning the coolant to the respective circuits. In the present embodiment, the first radiator 21A exchanges heat with the battery 13 via the fluid. Therefore, the first radiator 21A is also referred to as a "battery-heat-exchanging portion 21A". On the other hand, the second radiator 21B exchanges heat with the motor 16 via the fluid. Therefore, the second radiator 21B is also referred to as a "motor-heat-exchanging portion 21B".

The radiators 21A and 21B are provided with the respective fans 22A and 22B that take the outside air into the heat exchanger 20. Operating the fans 22A and 22B actively sends the outside air to the respective radiators 21A and 21B. The direction in which the outside air flows (introduction and discharge) can be appropriately switched according to the setting of each of the fans 22A and 22B. For example, negative pressure may be generated by the fans 22A and 22B to facilitate the introduction of the outside air into the respective radiators 21A and 21B. In the present embodiment, the fans 22A and 22B are disposed on the vehicle width directional outside of the respective radiators 21A and 21B. Each of the fans 22A and 22B operates using electric power of the auxiliary battery. Hereinafter, the two fans 22A and 22B are respectively referred to as the "first fan 22A" and the "second fan 22B" when distinguished from each other.

The radiators 21A and 21B of the present embodiment are fixed to the side frame 12 integrally with the fans 22A and 22B respectively provided to the radiators 21A and 21B. To be more specific, the set of the first radiator 21A and the first fan 22A and the set of the second radiator 21B and the second fan 22B are integrated with each other, and are fixed by two L-shaped brackets 25 of which first ends are respectively attached to a front surface of the first radiator 21A and a rear surface of the second radiator 21B and of which second ends are each fastened to the side frame 12. The radiators 21A and 21B of the present embodiment are provided in postures parallel to the side frame 12. This means that each of the radiators 21A and 21B is mounted in a posture in which the normal line of a surface that receives the air (the surface having the largest area) coincides with the vehicle width direction D2.

In view of airflow, a gap may be provided between each of the radiators 21A and 21B and the side frame 12. Further, each of the radiators 21A and 21B preferably has a dimension in the up-down direction such that an upper end surface thereof is at a height position substantially equivalent to an upper surface of the side frame 12 and a lower end surface thereof is at a position that satisfies the requirement of the lowest ground height. Each of the radiators 21A and 21B is made of, for example, aluminum so as to achieve weight reduction.

### (First Module)

The first circuit of the first module 2A connects the battery 13 serving as the object to be cooled and the heat exchanger 20, and allows the fluid to circulate between the heat exchanger 20 and the battery 13. The first module 2A includes: the first circuit having the first flow path 23A through which the coolant flows and the first pump 24A; the first radiator 21A (battery-heat-exchanging portion 21A) described above; and the battery 13 to be cooled by (i.e., subjected to heat exchange with) the coolant. The battery-heat-exchanging portion 21A and the battery 13 are both provided on the first flow path 23A. In the present embodiment, the DC/DC converter 14 is also included in the first module 2A. That is, the DC/DC converter 14 is also provided on the first flow path 23A and is included in the object to be cooled.

The battery-heat-exchanging portion 21A is attached on the vehicle width directional outside of one (on the right side in Fig. 1) of the side frames 12 and to a side surface of the side frame 12 between the front wheels 18 and the rear wheels 19 in the vehicle length direction D1. The battery-heat-exchanging portion 21A is disposed closer to the front wheels 18 than the second radiator 21B (motor-heat-exchanging portion 21B). In other words, the battery-heat-exchanging portion 21A is disposed closer to the battery 13 than the motor 16 in the vehicle length direction D1. In the present embodiment, the battery-heat-exchanging portion 21A and the object (the battery 13, the DC/DC converter 14) to be cooled are disposed adjacent to each other with the right side frame 12 interposed therebetween. In the mounting structure of the present embodiment, with respect to the vehicle length direction D1, the battery-heat-exchanging portion 21A is disposed between the battery 13 and the motor 16.

The way of routing the first flow path 23A is not particularly limited as long as the first flow path 23A connects the battery-heat-exchanging portion 21A and the object (the battery 13, the DC/DC converter 14) to be cooled, and the fluid circulates therein. As an example, the first flow path 23A includes: a first portion extending from the battery-heat-exchanging portion 21A to the battery 13 located on the vehicle width directional inside; and a second portion extending from the battery 13 to the DC/DC converter 14. The first pump 24A is disposed on the first portion.

The flow of the coolant in the first module 2A will now be explained. The coolant cooled by the battery-heat-exchanging portion 21A flows through the first flow path 23A by means of the first pump 24A in one direction with a predetermined flow amount and flows into the battery 13. The coolant cools the battery 13 by flowing through a cooling flow path (not illustrated) within the battery 13 and further flows through cooling flow paths (none of which is illustrated) around and within the DC/DC converter 14 through the first flow path 23A to cool the DC/DC converter 14. Then, the coolant with an increased temperature due to the heat exchange returns to the battery-heat-exchanging portion 21A. The coolant that has returned to the battery-heat-exchanging portion 21A is cooled by exchanging heat with the outside air and flows out of the battery-heat-exchanging portion 21A to flow into the first pump 24A again. In this way, the first module 2A repeats the cooling cycle mainly of the battery 13.

### (Second Module)

The second circuit of the second module 2B connects the motor 16 serving as the object to be cooled and the heat exchanger 20, and allows the fluid to circulate between the heat exchanger 20 and the motor 16. The second module 2B includes: the second circuit having the second flow path 23B through which the coolant flows and the second pump 24B; the second radiator 21B (motor-heat-exchanging portion 21B) described above; and the motor 16 to be cooled by (i.e., subjected to heat exchange with) the coolant. The motor-heat-exchanging portion 21B and the motor 16 are both provided on the second flow path 23B. In the present embodiment, the gearbox 17, which is also included in the second module 2B, is not provided on the second flow path 23B, but is, for example, integrally mounted on the rear side of the motor 16.

The motor-heat-exchanging portion 21B is attached on the vehicle width directional outside of one (on the right side in Fig. 1) of the side frames 12 and to the side surface of the side frame 12 between the front wheels 18 and the rear wheels 19 in the vehicle length direction D1. The motor-heat-exchanging portion 21B is disposed closer to the rear wheels 19 than the first radiator 21A (the battery-heat-exchanging portion 21A). In other words, the motor-heat-exchanging portion 21B is disposed closer to the motor 16 than the battery 13 in the vehicle length direction D1. In the present embodiment, the motor-heat-exchanging portion 21B and the object (the motor 16) to be cooled are disposed adjacent to each other with the right side frame 12 interposed therebetween. In the mounting structure of the present embodiment, with respect to the vehicle length direction D1, the motor-heat-exchanging portion 21B is disposed between the battery 13 and the motor 16.

The way of routing the second flow path 23B is not particularly limited as long as the second flow path 23B connects the motor-heat-exchanging portion 21B and the object (the motor 16) to be cooled, and the fluid circulates therein. As an example, the second flow path 23B includes: a first portion extending from the motor-heat-exchanging portion 21B to the motor 16 located on the vehicle width directional inside; and a second portion extending from the motor 16 to the motor-heat-exchanging portion 21B. The second pump 24B is provided on the first portion.

The flow of the coolant in the second module 2B will now be explained. The coolant cooled by the motor-heat-exchanging portion 21B flows through the second flow path 23B by means of the second pump 24B in one direction with a predetermined flow amount and flows into the motor 16. The coolant flows through a cooling flow path (not illustrated) within the motor 16 to cool the motor 16 and passes through the second flow path 23B. Then, the coolant with an increased temperature due to the heat exchange returns to the motor-heat-exchanging portion 21B. The coolant that has returned to the motor-heat-exchanging portion 21B is cooled by exchanging heat with the outside air and flows out of the motor-heat-exchanging portion 21B to flow into the second pump 24B again. In this way, the second module 2B repeats the cooling cycle of the motor 16.

### [2. Actions and Effects]

The mounting structure described above is designed for the heat exchanger 20 that exchanges heat, via the fluid, with the battery 13 for driving and the motor 16 for driving the rear wheels that are mounted on the vehicle 1 including the side frame 12. The present mounting structure is provided with the first circuit connecting the heat exchanger 20 and the battery 13, and the second circuit connecting the heat exchanger 20 and the motor 16. In the first circuit, the fluid circulates between the heat exchanger 20 and the battery 13, and in the second circuit, the fluid circulates between the heat exchanger 20 and the motor 16. Further in the present mounting structure, the heat exchanger 20 is mounted on the vehicle width directional outside of the side frame 12.

Thus, as compared with the conventional configuration in which the heat exchanger 20 is mounted on the front side of the vehicle (for example, below the front end of the cab), the present mounting structure achieves higher degree of freedom in the mounting position of the heat exchanger 20, which enables the heat exchanger 20 to be arranged near the battery 13 and the motor 16. This can eliminate the inconvenience caused by the heat exchanger 20 separated away from the battery 13 and the motor 16. As a specific example, it is possible to shorten at least one of the first circuit connecting the heat exchanger 20 and the battery 13 and the second circuit connecting the heat exchanger 20 and the motor 16. As a result, the cost, the weight, the space for arranging the first circuit and the second circuit, and so on can be reduced. In addition, providing the first circuit and the second circuit separately from each other increases the degree of freedom in routing the circuits. That is, it is possible to individually set how to arrange the first circuit and the second circuit, so that the first circuit and the second circuit can be shortened also from this point of view.

Shortening the first circuit and the second circuit enables so-called air release, which is an operation of taking out the gas (air) contained in the fluid in the circuits, to be completed early. Further, providing the first circuit on the battery 13 side and the second circuit on the motor 16 side separately from each other enables those circuits to be individually modularized. This makes it possible to manage variants of various vehicle types by merely changing circuits (or modules including the circuits). Further, since the heat exchanger 20 is not disposed on the front side of the vehicle 1, another device (for example, the battery 13) can be disposed in the space on the front side of the vehicle 1.

In the mounting structure described above, the battery 13 is disposed in front of the motor 16, and the heat exchanger 20 is disposed between the front wheels 18 and the rear wheels 19 and closer to the rear wheels 19 in the vehicle length direction. According to such an arrangement, it is possible to dispose the heat exchanger 20 and the battery 13 close to each other and also to dispose the heat exchanger 20 and the motor 16 close to each other, so that both the first circuit and the second circuit can be shortened.

In the mounting structure described above, the heat exchanger 20 includes the battery-heat-exchanging portion 21A connected to the first circuit and the motor-heat-exchanging portion 21B connected to the second circuit, and the battery-heat-exchanging portion 21A is disposed closer to the battery 13 than the motor-heat-exchanging portion 21B in the vehicle length direction. This can further shorten the first circuit.

In addition, the motor-heat-exchanging portion 21B is disposed closer to the motor 16 than the battery-heat-exchanging portion 21A in the vehicle length direction. This can further shorten the second circuit.

In the mounting structure described above, both the battery-heat-exchanging portion 21A and the motor-heat-exchanging portion 21B are disposed between the battery 13 and the motor 16 in the vehicle length direction. This makes it possible to dispose the battery-heat-exchanging portion 21A close to the battery 13 and to dispose the motor-heat-exchanging portion 21B close to the motor 16. This can further shorten both the first circuit and the second circuit.

### 3. Modifications

Regardless of the embodiment described above, various modifications can be made without departing from the gist thereof. Each configuration of the present embodiment can be selected and omitted as necessary or may be combined as appropriate.

The heat exchanger 20 of the above embodiment is provided in a posture parallel to the side frame 12, but may alternatively be provided to the side frame 12, in a posture inclined to the vehicle width directional outside with respect to the vehicle length direction D1 (obliquely as viewed from above). That is, in an integrated state where the set of the first radiator 21Aand the first fan 22Aand the set of the second radiator 21B and the second fan 22B are integrated with each other, the heat exchanger 20 may be mounted obliquely from an outer surface of the side frame 12 such that a rear end thereof is located closer to the vehicle width directional outside than a front end thereof. In other words, each of the radiators 21A and 21B may be mounted in a posture in which the normal line of the surface that receives the air (the surface having the largest area) extends on the vehicle width directional outside and inclines obliquely forward with respect to the vehicle width direction D2. In this case, the gap between the heat exchanger 20 and the side frame 12 is increased toward a rear surface of the second radiator 21B, so that the bracket on the rear side may be adopted to have a vehicle width directional dimension larger than that of the bracket on the front side. The heat exchanger 20 inclined in this manner enables the fans 22A and 22B to take in the air (outside air) flowing in the vehicle length direction D1 more easily and can thus enhance heat exchanging efficiency.

The heat exchanger 20 of the above embodiment is provided in a posture parallel to the side frame 12, but may alternatively be provided to the side frame 12, in a posture inclined to the vehicle width directional outside with respect to the up-down direction of the vehicle 1 (obliquely as viewed from the front). That is, in a manner similar to the above, in the integrated state, the heat exchanger 20 may be mounted obliquely with respect to the outer surface of the side frame 12 so that a lower end thereof is positioned closer to the vehicle width directional outside than an upper end thereof, or the upper end is positioned closer to the vehicle width directional outside than the lower end. In other words, each of the radiators 21A and 21B is mounted in a posture in which the normal line of the surface that receives the air (the surface having the largest area) inclines from the horizontal direction. In this case as well, it is possible to fasten the heat exchanger 20 to the side frame 12 by devising the attaching positions of the brackets. The heat exchanger 20 inclined in this manner enables the fans 22A and 22B to easily take in the air (outside air) flowing in the vehicle length direction D1 especially below the vehicle 1 and can thus enhance the heat exchanging efficiency. In particular, by locating the lower end of the heat exchanger 20 closer to the vehicle width directional outside than the upper end, it is possible to prevent the wind blown out of the fans 22A and 22B from hitting an object located outside the fans 22A and 22B and to thus reduce the effect on the object.

In the above embodiment, the radiators 21A and 21B are integrally fixed to a surface on the vehicle width directional outside of the one of the side frames 12, but the first radiator 21A and the second radiator 21B may be fixed separately. In this case, the first radiator 21A and the second radiator 21B can be attached to the side frame 12 with a space therebetween. As a result, a tool box, a pump for a rear body, a compressor for a refrigerated vehicle, and the like can be mounted between the first radiator 21A and the second radiator 21B and thus the outer surface of the side frame 12 can be effectively utilized.

In the above embodiment, the radiators 21A and 21B are provided on the side surface of the one of the side frames 12, but the radiator 21A may be provided on the one (on the right side in Fig. 1) of the side frames 12 and the radiator 21B may be provided on the other one (on the left side in Fig. 1) of the side frames 12. As a result, the outer surface of each of the side frames 12 can be effectively utilized. In addition, this makes it possible to easily apply the present mounting structure to the vehicle 1 that has a short length (wheel base) between the front wheels 18 and the rear wheels 19.

In the embodiment described above, the front end of the battery 13 extends under the cab 11, but the battery 13 may have any configuration as long as its rear end is located closer to the rear side than the cab 11. Depending on the application of the vehicle, a smaller-sized battery for driving may be provided.

In the embodiment described above, the fans 22A and 22B are disposed on the vehicle width directional outside of the radiators 21A and 21B, respectively, but the fans 22A and 22B may alternatively be disposed on the vehicle width directional inside of the radiators 21A and 21B. The introduction and discharge of the outside air can be set freely according to the shape, angle, and rotational direction of fins of the fans 22A and 22B.

### [Reference Signs List]

- 1:: Vehicle
- 2:: Temperature adjusting system
- 2A:: First module
- 2B:: Second module
- 11:: Cab
- 12:: Side frame
- 13:: Battery
- 14:: DC/DC converter
- 16:: Motor
- 17:: Gearbox
- 18:: Front wheel
- 19:: Rear wheel
- 20:: Heat exchanger
- 21A:: First radiator (battery-heat-exchanging portion; heat exchanger)
- 22A:: First fan (heat exchanger)
- 23A:: First flow path (first circuit)
- 24A:: First pump (first circuit)
- 21B:: Second radiator (motor-heat-exchanging portion; heat exchanger)
- 22B:: Second fan (heat exchanger)
- 23B:: Second flow path (second circuit)
- 24B:: Second pump (second circuit)
- 25:: Bracket

## Claims

1. A mounting structure for a heat exchanger that exchanges heat, via fluid, with a battery for driving and a motor for driving rear wheels that are mounted on a vehicle having a side frame, the mounting structure comprising:
a first circuit that connects the heat exchanger and the battery and that allows the fluid to circulate between the heat exchanger and the battery; and
a second circuit that connects the heat exchanger and the motor and that circulates the fluid between the heat exchanger and the motor, wherein
the heat exchanger is mounted on a vehicle width directional outside of the side frame.

2. The mounting structure according to claim 1, wherein
the battery is disposed in front of the motor in a vehicle length direction, and
the heat exchanger is disposed between front wheels and the rear wheels of the vehicle and closer to the rear wheels in the vehicle length direction.

3. The mounting structure according to claim 1, wherein
the heat exchanger comprises a battery-heat-exchanging portion connected to the first circuit and a motor-heat-exchanging portion connected to the second circuit, and
the battery-heat-exchanging portion is disposed closer to the battery than the motor-heat-exchanging portion in the vehicle length direction.

4. The mounting structure according to claim 1, wherein
the heat exchanger comprises a battery-heat-exchanging portion connected to the first circuit and a motor-heat-exchanging portion connected to the second circuit, and
the motor-heat-exchanging portion is disposed closer to the motor than the battery-heat-exchanging portion in the vehicle length direction.

5. The mounting structure according to claim 1, wherein
the heat exchanger comprises a battery-heat-exchanging portion connected to the first circuit and a motor-heat-exchanging portion connected to the second circuit, and
the battery-heat-exchanging portion and the motor-heat-exchanging portion are both disposed between the battery and the motor in the vehicle length direction.

6. The mounting structure according to claim 1, wherein
the heat exchanger is mounted on the vehicle so as to be inclined to the vehicle width directional outside with respect to the vehicle length direction.

7. The mounting structure according to claim 1 or 6, wherein
the heat exchanger is mounted on the vehicle so as to be inclined to the vehicle width directional outside with respect to an up-down direction of the vehicle.
